# EUROPÄISCHE PATENTANMELDUNG

(11) **EP 4 092 541 A1**
(43) Veröffentlichungstag der Anmeldung: **23.11.2022**
(21) Anmeldenummer: 21020272.7
(22) Anmeldetag: 21.05.2021
(51) Int. Cl.: G06F 16/14, G06F 16/16, G06F 16/23

(54) **ABSICHERUNG UND VERIFIKATION VON DATENELEMENTEN IN EINEM VERTEILTEN COMPUTERNETZWERK**

(71) Anmelder: Unibright IT GmbH, 55411 Bingen (DE)
(72) Erfinder: Jung, Marten, 55411 Bingen (DE); Schmidt, Stefan, 55425 Waldalgesheim (DE)
(74) Vertreter: Reich, Jochen

(57) **Zusammenfassung**

Die vorliegende Erfindung ist auf ein computerimplementiertes Verfahren zur effizienten Absicherung und Verifikation von Datenelementen in einem verteilten Computernetzwerk gerichtet. Erfindungsgemäß wird eine effiziente Datenhaltung vorgeschlagen, welche es ermöglicht, dass in einer sogenannten Blockchain lediglich eine geringe Menge an Daten abgespeichert werden muss. Somit müssen in einer Anwendungsdomäne nicht alle Daten in der Blockchain abgespeichert werden und hierdurch entstehen signifikante Ersparnisse in der redundanten Speicherbelegung sowie in der Datenübertragung. Die vorgeschlagene Erfindung bietet den Vorteil, dass die ausgelagerten Daten derart minimiert werden, dass eine geringfügige Bandbreite ausreichend zum Betreiben des vorgeschlagenen Verfahrens ist. Folglich ist die vorgeschlagene Erfindung auch bei mobilen Endgeräten einsetzbar, wodurch auch Schwankungen in der Datenübertragung bzw. geringe Bandbreiten keinen störenden Einfluss auf das vorgeschlagene Verfahren haben. Aufgrund der geringen Datenmengen, welche ausgelagert werden, ist zudem eine schnelle und effiziente Verifikation der Datenelemente möglich. Die vorliegende Erfindung ist ebenso auf eine Systemanordnung gerichtet, welche zur Ausführung des Verfahrens eingerichtet ist, sowie auf ein Computerprogrammprodukt, mit Steuerbefehlen, welche das Verfahren implementieren.

## Beschreibung

Die vorliegende Erfindung ist auf ein computerimplementiertes Verfahren zur effizienten Absicherung und Verifikation von Datenelementen in einem verteilten Computernetzwerk gerichtet. Erfindungsgemäß wird eine effiziente Datenhaltung vorgeschlagen, welche es ermöglicht, dass in einer sogenannten Blockchain lediglich eine geringe Menge an Daten abgespeichert werden muss. Somit müssen in einer Anwendungsdomäne nicht alle Daten in der Blockchain abgespeichert werden und hierdurch entstehen signifikante Ersparnisse in der redundanten Speicherbelegung sowie in der Datenübertragung. Die vorgeschlagene Erfindung bietet den Vorteil, dass die ausgelagerten Daten derart minimiert werden, dass eine geringfügige Bandbreite ausreichend zum Betreiben des vorgeschlagenen Verfahrens ist. Folglich ist die vorgeschlagene Erfindung auch bei mobilen Endgeräten einsetzbar, wodurch auch Schwankungen in der Datenübertragung bzw. geringe Bandbreiten keinen störenden Einfluss auf das vorgeschlagene Verfahren haben. Aufgrund der geringen Datenmengen, welche ausgelagert werden, ist zudem eine schnelle und effiziente Verifikation der Datenelemente möglich. Die vorliegende Erfindung ist ebenso auf eine Systemanordnung gerichtet, welche zur Ausführung des Verfahrens eingerichtet ist, sowie auf ein Computerprogrammprodukt, mit Steuerbefehlen, welche das Verfahren implementieren.

Aus dem Stand der Technik ist ein verteiltes und redundantes Abspeichern von Daten bekannt, wobei zur Absicherung von einer Datenintegrität die zugrunde liegenden Daten derart repliziert werden, dass diese fälschungssicher sind. So wird im Stand der Technik ein Datensatz bereitgestellt und dieser Datensatz wird sodann dermaßen oft repliziert, dass eine Verfälschung eines einzelnen Datensatzes sofort auffällt, da die anderen Datensätze eben einen anderen Wert aufweisen. Hierzu werden die Datensätze auf verteilten Rechnereinheiten abgelegt, die netzwerktechnisch untereinander verbunden sind. Zudem werden Referenzen abgespeichert, welche anzeigen, wo welcher Datensatz zu finden ist. Erfolgt sodann eine Verifikation der zugrunde liegenden Daten, so werden alle Datensätze oder zumindest eine Auswahl hieraus ausgelesen und somit entscheidet die Mehrheit der gleichlautenden Datensätze über deren Integrität. Hierbei sollte die Anzahl der gleichlautenden Datensätze signifikant über der Anzahl der abweichenden Datensätze liegen.

Der Stand der Technik sieht bei einer solchen verketteten Liste vor, dass die Nutzdaten an sich abgespeichert werden und bei Bedarf ausgelesen werden. Im Rahmen von Währungen wird beispielsweise abgespeichert, dass ein Akteur an einen weiteren Akteur einen gewissen Geldbetrag überwiesen hat. Somit wird in der verketteten Liste der erste Akteur abgespeichert, der zweite Akteur und sodann wird die Relation zwischen diesen beiden Akteuren abgespeichert. Die Relation sieht vor, dass ein gewisser Geldbetrag übergegangen ist. Diese Informationen werden in dem Computernetzwerk derart oft repliziert, dass selbst ein Verfälschen einer einzelnen Information sofort auffallen würde, da die weiteren duplizierten Daten eine andere Information bereitstellen.

Ein Problem im Stand der Technik ist es hierbei, dass die Nutzdaten an sich repliziert werden und somit entsteht ein hoher Speicherbedarf. Der hohe Speicherbedarf wird dahingehend noch verstärkt, dass eine hohe Anzahl von Replikationen in dem Computernetzwerk abgespeichert werden muss. Dies führt zu unterschiedlichen technischen Problemen. Technische Probleme umfassen beispielsweise, dass eine hohe Bandbreite bzw. Netzwerkauslastung entsteht. Aufgrund der umfangreichen Datensätze müssen große Mengen von Daten nicht nur in das Netzwerk hinein geladen werden, sondern die einzelnen Netzwerkknoten müssen diese großen Datenmengen untereinander aufteilen, wobei sich also diese Netzwerkauslastung multipliziert.

Ein weiterer Nachteil im Stand der Technik ist die hohe Speicherbelegung auf den unterschiedlichen Netzwerkknoten. So werden die Nutzdaten an sich abgespeichert, welche sehr umfangreich sein können. Wie auch bei der Bandbreite wird dieses Problem dadurch verstärkt, dass diese Speicherbelegungen auf jedem Netzwerkknoten vorhanden sind und somit multipliziert sich noch die Speicherbelegung insgesamt.

Ein weiteres Problem im Stand der Technik ist es, dass die umfangreichen Datensätze von den Netzwerkknoten verifiziert werden müssen. Werden also aufgrund von Nutzdaten entsprechende Informationen generiert, so benötigt es hohe Rechenkapazitäten, da die Nutzdaten umfangreich sein können und somit müssen diese umfangreichen Daten verifiziert werden. Wird beispielsweise eine Verifikation mittels eines Hash Wertes durchgeführt, so müssen entsprechende Algorithmen auf den umfangreichen Nutzdaten operieren, was zu einer großen Prozessorlast führt.

Die vorgenannten Probleme bringen noch weitere technische Probleme mit sich, beispielsweise, dass ein erhöhter Energiebedarf resultiert, der wiederum zu einer vergrößerten Wärmebelastung führt. So müssen entsprechende Rechenzentren aufwendig gekühlt werden.

Der Stand der Technik versucht solchen Problemen dahingehend zu begegnen, dass entsprechend effiziente Algorithmen entworfen werden. Dies ist jedoch sehr aufwendig und zudem fehleranfällig. Zwar gibt es sichere Verifikationsalgorithmen, diese skalieren jedoch nur aufwendig unter der entstehenden Datenlast. Der Stand der Technik versucht weiter den genannten Problemen entgegenzuwirken, indem größere Hardwareressourcen bereitgestellt werden. Dies ist jedoch wiederum technisch aufwendig und führt zu noch mehr Energieaufwand und Kühlungsbedarf. Auch solche Lösungen leiden darunter, dass geringe Hardwareressourcen und eine geringe Bandbreite verfügbar sein können, wie dies beispielsweise bei mobilen Endgeräten der Fall ist. So sind viele bestehende Sicherheitsmechanismen bei mobilen Endgeräten nicht einsetzbar.

Somit ist es eine Aufgabe der vorliegenden Erfindung ein Verfahren zur effizienten Absicherung und Verifikation von Datenelementen vorzuschlagen, welches die genannten Probleme adressiert. Darüber hinaus ist es eine Aufgabe der vorliegenden Erfindung eine entsprechend eingerichtete Systemanordnung vorzuschlagen, welche zum Betreiben des Verfahrens geeignet ist. Darüber hinaus soll ein Computerprogrammprodukt mit Steuerbefehlen vorgeschlagen werden, welche das Verfahren ausführen bzw. die Systemanordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein computerimplementiertes Verfahren zur effizienten Absicherung und Verifikation von Datenelementen in einem verteilten Computernetzwerk vorgeschlagen, aufweisend ein Bereitstellen mindestens eines Datenelements in einem ersten Netzwerkknoten und Erzeugen jeweils einer ersten eindeutigen Identifizierungsinformation, welche jeweils das mindestens eine Datenelement eindeutig kennzeichnet; ein dem ersten Netzwerkknoten entferntes und zudem redundantes und verteiltes Abspeichern jeweils der ersten Identifizierungsinformation; ein Übersenden des mindestens einen Datenelements von dem ersten Netzwerkknoten an mindestens einen zweiten Netzwerkknoten mitsamt jeweils einer Referenz zwischen dem mindestens einen Datenelement und der entsprechenden Identifizierungsinformation; eine Erzeugen einer zweiten Identifizierungsinformation für das jeweils mindestens eine Datenelement in dem mindestens zweiten Netzwerknoten; und ein Verifizieren des übersendeten Datenelements in dem mindestens zweiten Netzwerkknoten mittels eines Vergleichens der ersten Identifizierungsinformation und der zweiten Identifizierungsinformation, wobei die erste Identifizierungsinformation mittels der übersendeten Referenz durch den mindestens zweiten Netzwerkknoten entfernt ausgelesen wird.

Das vorgeschlagene Verfahren ist Computer implementiert, wobei mehrere Computer zusammenwirken und netzwerktechnisch verbunden sind. Das Verfahren ist effizient, da erfindungsgemäß keinerlei Nutzdaten in der verketteten Liste, also der Blockchain, abgespeichert werden. Erfindungsgemäß werden lediglich Verifikationsdaten in der verketteten Liste abgespeichert, so dass die Nutzdaten auf lokalen Rechnern verbleiben können. So kann das vorgeschlagene Verfahren in einem Netzwerk eines Unternehmens Einsatz finden, wobei die verkettete Liste außerhalb dieses Netzwerks betrieben wird. Beispielsweise wird die verkettete Liste in dem Internet betrieben, während das Netzwerk des Unternehmens hiervon technisch abgekoppelt ist. Dieses Abkoppeln kann beispielsweise mittels einer Netzwerkkomponente erfolgen.

Zudem ist das vorgeschlagene Verfahren sicher, da die Vorteile der verketteten Liste Anwendung finden und somit können Verifikationsdaten redundant abgespeichert werden und sind somit fälschungssicher. Dies heißt also, dass die Integrität der Daten gewährleistet werden kann. So können Daten erzeugt werden, welche das jeweilige Datenelement eindeutig beschreiben, ohne dass hierbei Rückschlüsse auf die Daten an sich möglich sind. Somit kann ein Datenelement, welches in einem Netzwerkknoten erzeugt wird, in einem zweiten Netzwerkknoten verifiziert werden.

Das verteilte Computernetzwerk kann derart ausgestaltet werden, dass der erste Netzwerkknoten und der zweite Netzwerkknoten in einem gemeinsamen Computernetzwerk angeordnet sind oder in einem jeweils entfernten Computernetzwerk. Die verteilte Liste wird typischerweise in dem Internet abgespeichert. Das Netzwerk ist dadurch verteilt, dass Netzwerkkomponenten zwischen dem ersten Netzwerkknoten und dem Internet vorgehalten werden und Netzwerkkomponenten zwischen dem zweiten Netzwerkknoten und dem Internet vorgehalten werden. Somit erfolgt die Abspeicherung der Verifikationsdaten nicht in dem Netzwerk, in dem sich der erste Netzwerkknoten befindet. Bei der Aufteilung in ein verteiltes Netzwerk kann es sich auch um eine logische Aufteilung handeln, wobei typischerweise der erste Netzwerkknoten und der zweite Netzwerkknoten von dem Internet datentechnisch abgekoppelt sind.

Bei dem Bereitstellen mindestens eines ersten Datenelements handelt es sich typischerweise um das Erstellen einer Datei bzw. einfach eines Datensatzes. So kann es sich bei dem Datenelement um ein Dokument, eine Datei, einen Datensatz oder dergleichen handeln. Ein Datensatz kann einen Vorgang oder ein realweltliches Konzept beschreiben. Beispielsweise kann auch ein Prozess definiert werden, der unterschiedliche Datensätze in Relation setzt. So kann ein Datenelement auch ein Ereignis oder eine Aktivität innerhalb eines Prozesses darstellen.

Das entsprechende Datenelement bzw. die Datenelemente werden in dem ersten Netzwerkknoten bereitgestellt und sodann erzeugt eben dieser Netzwerkknoten einen ersten eindeutigen Datensatz, der als Identifizierungsinformation bezeichnet wird. Diese Identifizierungsinformation kennzeichnet das mindestens eine Datenelement eindeutig. So kann eine Größe des Datensatzes berechnet werden, welche derart genau berechnet wird, dass dieses ein im Wesentlichen eindeutiges Kennzeichen darstellt. Besonders bevorzugt wird jedoch ein Hash Wert des Datenelements erzeugt. Die Identifizierungsinformation wird für jedes Datenelement erzeugt, wobei es auch möglich ist, dass für eine Mehrzahl von Datenelementen eine Identifizierungsinformation bereitgestellt wird. Die Identifizierungsinformation soll sicherstellen, dass für das jeweilige Datenelement bzw. die Mehrzahl von Datenelementen lediglich eine Identifizierungsinformation vorhanden ist.

Hierbei ist es ausreichend, dass die Identifizierungsinformation im Wesentlichen eindeutig ist. Dies bedeutet, dass der entsprechende Wertebereich derart groß sein kann, dass eine zweideutige Repräsentation mit hoher Wahrscheinlichkeit ausgeschlossen ist. Eine hohe Wahrscheinlichkeit liegt beispielsweise dann vor, wenn eine Kollision zweier Identifizierungsinformationen mit einer Wahrscheinlichkeit von unter einem Prozent vorliegt. Somit wird sichergestellt, dass die Identifizierungsinformation bezüglich jedes Datenelements im Wesentlichen eindeutig ist.

Diese Identifizierungsinformation, die der Verifikation des Datenelements dient, wird sodann in einer verteilten Liste abgespeichert. Somit kann also dieses redundante und verteilte Abspeichern in einer Blockchain erfolgen. Der Speicherort ist dem ersten Netzwerkknoten entfernt, was bedeutet, dass diese Information nicht auf dem ersten Netzwerkknoten abgelegt wird. Dies dient der Sicherheit der Identifizierungsinformation. Wäre diese auf dem ersten Netzwerkknoten abgelegt, so könnte der Ersteller des Datenelementes auch diese Verifizierungsinformation abändern. Dies wird dadurch unterbunden, dass die Identifizierungsinformation entfernt abgespeichert wird. Besonders vorteilhaft ist es hierbei, falls der Betreiber des ersten Netzwerkknoten lediglich dahingehend schreibenden Zugriff auf den Speicherort hat, dass er die Identifizierungsinformation dort abspeichern kann, diese aber nicht verändern kann. Auch ein Verändern würde keinen Sicherheitsbruch bedeuten, da nach dem Abspeichern der Identifizierungsinformation diese sofort repliziert werden kann und somit kann die Integrität dieser Information gewährleistet werden.

Bei dem verteilten Abspeichern kann es sich auch um ein mehrfaches Abspeichern von Teilen der Identifizierungsinformation handeln. So kann die Identifizierungsinformation aufgeteilt werden und auf unterschiedlichen Netzwerkknoten der Blockchain abgespeichert werden. Somit ist die Identifizierungsinformation ebenfalls vor einem unberechtigten Zugriff gesichert, da zum Auslesen dieser Identifizierungsinformation alle Teile vorliegen müssten.

Daraufhin erfolgt ein Übersenden des mindestens einen Datenelements an den zweiten Netzwerkknoten. Somit werden also die Datenelemente bzw. das Datenelement lediglich auf dem ersten Netzwerkknoten und dem mindestens zweiten Netzwerkknoten lokal gespeichert. Dies wiederum impliziert, dass die Datenelemente eben nicht in der sogenannten Blockchain abgespeichert werden sondern eben nur die Identifizierungsinformation. Folglich wird die erste Identifizierungsinformation nicht auf dem ersten Netzwerkknoten und nicht auf dem zweiten Netzwerkknoten abgespeichert. Diese Information wird lediglich entfernt abgespeichert. Somit entzieht sich diese Information dem Zugriff der Netzwerkknoten dahingehend, dass diese Information nicht manipuliert werden kann. Im Gegensatz hierzu wird das Datenelement an sich, also die Nutzdaten, zwischen dem ersten Netzwerkknoten und dem zweiten Netzwerkknoten ausgetauscht. Dies sorgt also dafür, dass die Nachteile im Stand der Technik dahingehend überwunden werden, dass das Datenelement nicht repliziert und verteilt im Netz entfernt abgespeichert werden muss. Die Blockchain wird also nicht mit Nutzdaten beaufschlagt, so dass hier lediglich die Identifizierungsinformation abgespeichert werden muss. Dies führt zu einer erheblichen Datenreduktion und somit zu einem geringeren technischen Aufwand.

Damit auf die Identifizierungsinformation zugegriffen werden kann wird eine Referenz ebenfalls an den zweiten Netzwerkknoten übermittelt, die angibt, wo die Identifizierungsinformation abgespeichert ist. Hierbei kann es sich um einen Link handeln. So kann beispielsweise ein Hinweis darauf gegeben werden, wo die Identifizierungsinformation innerhalb des Netzwerkes bzw. der Blockchain abgespeichert ist.

Da der zweite Netzwerkknoten nunmehr das Datenelement bzw. die Datenelemente erhalten hat, kann dieser zweite Netzwerkknoten ebenso eine Identifizierungsinformation berechnen, die eindeutig das Datenelement beschreibt. Diese Beschreibung soll jedoch keinerlei Rückschlüsse auf den Inhalt des Datenelements an sich zulassen. Somit ist eine Identifizierungsinformation allgemein eine technische Information, welche Eigenschaften über das Datenelement beschreibt. Diese Eigenschaften enthalten jedoch keine semantische Information und lassen auch keine Interpretation des Datenelements zu. Als besonders bevorzugtes Beispiel wird hierzu ein Hash Wert angeführt.

Da nunmehr die erste Identifizierungsinformation vorliegt und die zweite Identifizierungsinformation können beide Informationen miteinander verglichen werden. Hierzu nutzt der zweite Netzwerkknoten die Referenz auf die erste Identifizierungsinformation und liest diese aus. Sodann wird diese Information mit der zweiten Identifizierungsinformation verglichen und bei einem Übereinstimmen erfolgt ein positives Verifizieren. Besonders vorteilhaft ist es, dass der zweite Netzwerkknoten die gleiche Methodik zur Erstellung der Identifizierungsinformation verwendet, wie der erste Netzwerkknoten.

Gemäß einem Aspekt der vorliegenden Erfindung ist die Identifizierungsinformation eineindeutig. Dies hat den Vorteil, dass sowohl jeden Datenelement eine Identifizierungsinformation zugeordnet werden kann, sowie jeder Identifizierungsinformation ein Datenelement. Somit erfolgt eine eineindeutige Abbildung wobei jedoch keinerlei Rückschlüsse auf den Inhalt des Datenelements möglich sind.

Gemäß einem weiteren Aspekt der vorliegenden Erfindung lässt die Identifizierungsinformation keinen Rückschluss auf den semantischen Inhalt des mindestens einen Datenelements zu. Dies hat den Vorteil, dass keinerlei Interpretation des Datenelements möglich ist, sondern vielmehr werden lediglich technische Informationen wie zum Beispiel eine Datengröße abgespeichert. Hierbei muss die Datengröße derart spezifisch sein, dass sichergestellt wird, dass lediglich ein Datenelement mit einer solchen Datengröße vorhanden ist. Die Identifizierungsinformation dient der eindeutigen Kennzeichnung des Datenelements, so dass bei einem veränderten Datenelement sofort die Identifizierungsinformation abweichen würde.

Gemäß einem weiteren Aspekt der vorliegenden Erfindung wird die Identifizierungsinformation als ein Hash Wert gebildet. Dies hat den Vorteil, dass ein eindeutiger Wert geschaffen wird, welcher zwar das Datenelement beschreibt, hierbei jedoch lediglich technische Information vorhält. Ein Hash Wert lässt keinerlei Rückschlüsse auf den Inhalt des Datenelements zu. Anhand des Hash Wertes kann jedoch die Integrität des Datenelements bewertet werden, da bei einem Verändern des Datenelements auch eine geänderte Identifizierungsinformation resultiert.

Gemäß einem weiteren Aspekt der vorliegenden Erfindung erfolgt das redundante und verteilte Abspeichern in einer verketteten Liste. Dies hat den Vorteil, dass bestehende Technologien wieder verwendet werden können und somit wird sichergestellt, dass die Identifizierungsinformation nicht gefälscht werden kann. Das redundante und verteilte Abspeichern sorgt dafür, dass bei einer Manipulation an einem einzelnen Speicherort weitere Replikationen vorliegen, die nicht manipuliert werden können. Um die Identifizierungsinformation insgesamt zu manipulieren müssten also eine überwiegende Mehrzahl von Speicherorten zugegriffen werden und entsprechende Daten verändert werden.

Gemäß einem weiteren Aspekt der vorliegenden Erfindung wird das Datenelement ausschließlich in dem ersten Netzwerkknoten und dem mindestens zweiten Netzwerkknoten persistent gespeichert. Dies hat den Vorteil, dass das Datenelement nicht in der verketteten Liste, also der Blockchain, gespeichert wird, sondern vielmehr erfolgt ein Austauschen dieses Datenelements lediglich zwischen dem ersten Netzwerkknoten und dem mindestens zweiten Netzwerkknoten. Somit wird also sichergestellt, dass lediglich diese Netzwerkknoten Zugriff auf das Datenelement haben. Nicht ausgeschlossen ist es hierbei, dass aus technischer Sicht Netzwerkkomponenten ebenfalls Zugriff auf das Datenelement haben. So kann mittels des Netzwerks das Datenelement übermittelt werden, wobei netzwerktechnisch eingerichtete Komponenten hierbei Zugriff auf das Datenelement bekommen. Diese netzwerktechnisch notwendigen Komponenten benutzen hierzu jedoch einen flüchtigen Speicher und leiten das Datenelement lediglich durch. Nach einem Durchleiten eines solchen Datenelements wird eben dieses auf der Netzwerkkomponente wieder gelöscht. Das Datenelement wird also dauerhaft nur auf dem ersten Netzwerkknoten und dem mindestens zweiten Netzwerkknoten vorgehalten.

Gemäß einem weiteren Aspekt der vorliegenden Erfindung erfolgte das Übersenden des mindestens einen Datenelements von dem ersten Netzwerkknoten an mindestens einen zweiten Netzwerkknoten mittels einer nachrichtenbasierten Middleware. Dies hat den Vorteil, dass beispielsweise eine NATS Technologie Einsatz finden kann. Das Datenelement wird also netzwerktechnisch besonders abgesichert. Hierzu können weitere Technologien Einsatz finden. Beispielsweise kann das Datenelement verschlüsselt werden oder über einen besonders gesicherten Kanal übermittelt werden.

Gemäß einem weiteren Aspekt der vorliegenden Erfindung stellt die Referenz einen Hinweis auf einen Speicherort und/oder eine Speicheradresse der ersten Identifizierungsinformation bereit. Dies hat den Vorteil, dass anhand der Referenz der zweite Netzwerkknoten einen Zugang zu der ersten Identifizierungsinformation erhält. Somit wird also nicht die Identifizierungsinformation an sich übermittelt, sondern es wird lediglich ein Link bereitgestellt. Dies verhindert wiederum, dass die Identifizierungsinformation manipuliert werden kann.

Gemäß einem weiteren Aspekt der vorliegenden Erfindung wird das Erzeugen der zweiten Identifizierungsinformation unter Verwendung eines Hinweises durchgeführt, wobei der Hinweis angibt, wie die erste Identifizierungsinformation erzeugt wurde. Dies hat den Vorteil, dass vergleichbare Werte geschaffen werden können. Somit sind also beide Identifizierungsinformationen miteinander kompatibel und können verglichen werden.

Gemäß einem weiteren Aspekt der vorliegenden Erfindung erfolgt bei einem Übereinstimmen der ersten Identifizierungsinformation und der zweiten Identifizierungsinformation ein positives Verifizieren. Dies hat den Vorteil, dass sichergestellt wurde, dass das Datenelement eben nicht verfälscht wurde und dass das gleiche Datenelement auf dem ersten Netzwerkknoten und den weiteren Netzwerkknoten, also dem mindestens zweiten Netzwerkknoten, vorliegt.

Gemäß einem weiteren Aspekt der vorliegenden Erfindung wird bei keinem Übereinstimmen der ersten Identifizierungsinformation und der zweiten Identifizierungsinformation das mindestens eine Datenelement verworfen und/oder der erste Netzwerkknoten wird hierüber informiert. Dies hat den Vorteil, dass identifiziert wurde, dass das Datenelement verfälscht ist, da die entsprechende Sicherungsinformation nicht übereinstimmt. Somit kann das Datenelement verworfen werden bzw. ein neues Datenelement angefordert werden. Hierbei ist es möglich, eine weitere Version des neuen Datenelements zu erstellen und diese zu übermitteln. Additiv oder alternativ ist es möglich, dass der erste Netzwerkknoten über das negative Verifizieren unterrichtet wird.

Gemäß einem weiteren Aspekt der vorliegenden Erfindung erfolgt das Abspeichern jeweils der ersten Identifizierungsinformation in einer Blockchain. Dies hat den Vorteil, dass keine Nutzdaten in die Blockchain gelangen, sondern vielmehr wird nur die Identifizierungsinformation abgespeichert und eben auch durch die Blockchain Technologie gesichert.

Die Aufgabe wird auch gelöst durch Systemanordnung zur effizienten Absicherung und Verifikation von Datenelementen in einem verteilten Computernetzwerk, aufweisend eine Schnittstelleneinheit eingerichtet zum Bereitstellen mindestens eines Datenelements in einem ersten Netzwerkknoten und einer ersten Berechnungseinheit eingerichtet zum Erzeugen jeweils einer ersten eindeutigen Identifizierungsinformation, welche jeweils das mindestens eine Datenelement eindeutig kennzeichnet; eine Speichereinheit eingerichtet zum dem ersten Netzwerkknoten entfernten und zudem redundanten und verteilten Abspeichern jeweils der ersten Identifizierungsinformation; einer Übermittlungseinheit eingerichtet zum Übersenden des mindestens einen Datenelements von dem ersten Netzwerkknoten an mindestens einen zweiten Netzwerkknoten mitsamt jeweils einer Referenz zwischen dem mindestens einen Datenelement und der entsprechenden Identifizierungsinformation; mindestens eine zweite Berechnungseinheit eingerichtet zum Erzeugen einer zweiten Identifizierungsinformation für das jeweils mindestens eine Datenelement in dem mindestens zweiten Netzwerknoten; und mindestens eine Verifizierungseinheit eingerichtet zum Verifizieren des übersendeten Datenelements in dem mindestens zweiten Netzwerkknoten mittels eines Vergleichens der ersten Identifizierungsinformation und der zweiten Identifizierungsinformation, wobei die erste Identifizierungsinformation mittels der übersendeten Referenz durch den mindestens zweiten Netzwerkknoten entfernt ausgelesen wird.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Blockschaltbild der vorgeschlagenen Systemanordnung zur effizienten Absicherung und Verifikation von Datenelementen in einem verteilten Computernetzwerk gemäß einem Aspekt der vorliegenden Erfindung;
- Figur 2:: ein weiteres schematisches Blockschaltbild der vorgeschlagenen Systemanordnung zur effizienten Absicherung und Verifikation von Datenelementen in einem verteilten Computernetzwerk gemäß einem Aspekt der vorliegenden Erfindung;
- Figur 3:: eine Verifikation von Datenelementen gemäß des vorgeschlagenen Verfahrens; und
- Figur 4:: ein schematisches Ablaufdiagramm des vorgeschlagenen Verfahrens gemäß einem Aspekt der vorliegenden Erfindung.

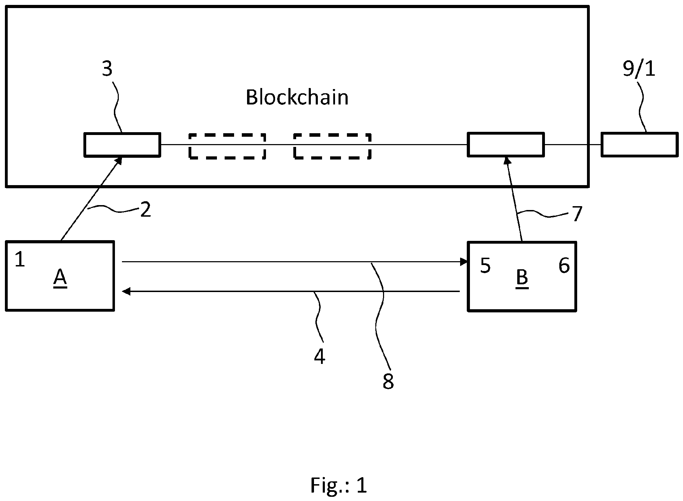

Figur 1 zeigt in einem schematischen Blockschaltbild das vorgeschlagene Ausführen des Verfahrens bzw. die Systemanordnung. Die Systemanordnung wird durch das vorgeschlagene Verfahren betrieben, wobei unten auf der linken Seite ein erster Akteur A und auf der rechten Seite ein zweiter Akteur B eingezeichnet sind. Hierbei handelt es sich auf der linken Seite um den ersten Netzwerkknoten und auf der rechten Seite um den zweiten Netzwerkknoten. Oben in der vorliegenden Figur 1 ist die Blockchain angeordnet, welche die Identifizierungsinformation abspeichert. Wie oben eingezeichnet ist, kann die Blockchain mehrere Identifizierungsinformationen abspeichern und kann somit eine Versionierung bzw. Historie einer Identifizierungsinformation anzeigen. Darüber hinaus können die einzelnen Einträge der Blockchain einen Prozess beschreiben. Ein Prozess besteht aus mehreren Datenelementen, wobei die Blockchain sodann die jeweiligen Identifizierungsinformationen der Datenelemente abspeichert. Im Generellen ist es besonders vorteilhaft, dass die Blockchain keine Nutzdaten abspeichert, sondern nur den Beweis bzw. die Verifikationsinformation, auch Identifizierungsinformation genannt.

So kann die Blockchain beispielsweise einen Workflow abspeichern, der aus unterschiedlichen Schritten besteht. Ein Schritt besteht hierbei aus einem Austauschen, einem Beweisen, einem Verankern und/ oder einer Verifikation eines Objektes. Bei einem Objekt kann es sich um ein realweltliches Konzept handeln, welches physisch vorliegen kann, oder als Aktivität oder Ereignis vorliegen kann. Bei einem solchen Objekt kann es sich um einen Auftrag, eine Lieferung, eine Rechnung oder dergleichen handeln. Diese Objekte werden als Datenelement bezeichnet.
1. Das Betreiben der Systemanordnung gemäß Figur 1 kann derart erfolgen, dass der Akteur A einen Auftrag in seinem lokal betriebenen System erstellt, der auch als Daten erleichtert werden kann. Der erste Netzwerkknoten erstellt hierzu einen Wert als Beweis 2. Dieser Beweis bzw. Hash Wert wird in der Blockchain verankert 3. Das heißt er wird dort gespeichert.
4. Der erste Netzwerkknoten sendet den Auftrag, also den Datensatz, und einen Link zum abgelegten Beweis an den zweiten Netzwerkknoten, also den zweiten Akteur B auf der rechten Seite. Dies erfolgt außerhalb der Blockchain.
5. Der zweite Netzwerkknoten erhält die Nachricht und erstellt ebenfalls einen Hash Wert, also eine Identifizierungsinformation bzw. einen Beweis.
6. Der zweite Netzwerkknoten überprüft, ob der erste Hash Wert mit dem zweiten Hash Wert des Auftrags übereinstimmt und verifiziert somit den Auftrag bzw. das Datenelement.
7. Der zweite Netzwerkknoten B verankert ein Feedback in der Blockchain, die also besagt, ob eine positive Verifikation oder eine negative Verifikation stattgefunden hat.
8. Der zweite Netzwerkknoten unterrichtet den ersten Netzwerkknoten außerhalb der Blockchain mittels einer Nachricht über das Ergebnis.
9. Der erste Netzwerkknoten kann nun entweder eine neue Version des Datenelements versenden, falls die erste Version abgelehnt wurde bzw. negativ verifiziert wurde, er kann mit einem weiteren Arbeitsschritt fortfahren oder aber er kann den Datenfluss beenden. Das Verfahren kann wieder zu Schritt 1 verzweigen.

Neue Versionen bzw. neue Arbeitsschritte oder ein Abbruch können ebenfalls untereinander verlinkt werden. Insgesamt ergibt sich also ein Graph der ausgetauschten Datenelemente, der entsprechenden Arbeitsschritte und Versionen bzw. eine Historie der Versionen und deren positive oder negative Verifikation.

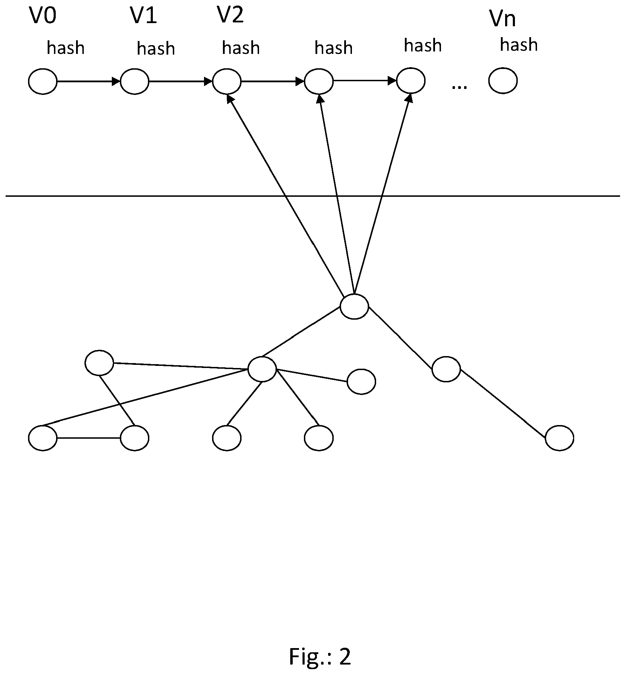

Figur 2 beschreibt oben ebenfalls eine verteilte Liste, wobei unterschiedliche Versionen VO,..., VN vorliegen. Diese bestehen aus Hash Werten. Die obere Ebene ist die sogenannte Metaebene, wobei die untere Ebene, durch eine horizontale Linie getrennt, die lokale Netzwerkebene darstellt. In der unteren Ebene befinden sich sowohl der erste Netzwerkknoten als auch der zweite Netzwerkknoten. Der erste Netzwerkknoten erzeugt ein Datenelement und speichert einen entsprechenden Hash Wert in der Metaebene, also der Blockchain, ab. Da mehrere Datenelemente von diesen Netzwerkknoten übermittelt werden können, werden auch mehrere Hash Werte erzeugt. Somit erhält im vorliegenden Ausführungsbeispiel jedes Datenelement eine Identifizierungsinformation.

In dem lokalen Netzwerk, unten, wird sodann das Datenelement übersendet und der zweite Netzwerkknoten erhält mittels der Referenz Zugriff auf die Identifizierungsinformation und kann somit diese Identifizierungsinformation auslesen. Da im zweiten Netzwerkknoten ebenfalls das Datenelement vorhanden ist, kann hierüber eine Identifizierungsinformation gebildet werden und sodann können beide Identifizierungsinformationen abgeglichen werden.

Bei dem vorgeschlagenen Netzwerk kann es sich insgesamt um das Internet handeln. Es kann sich aber auch nur bei der oberen Ebene, oberhalb der Linie, um das Internet handeln, wobei die Netzwerkknoten in einem lokalen Netzwerk eines Unternehmens angeordnet sind. Es können jedoch auch alle Konzepte, d.h. alle Netzwerkknoten und die Blockchain in dem Internet angeordnet werden.

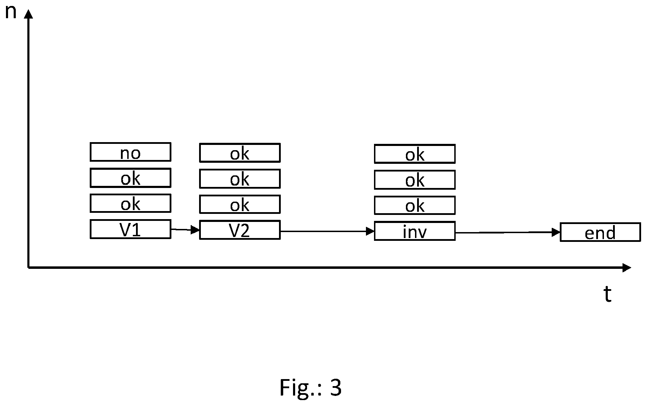

Figur 3 zeigt auf der x-Achse eine Versionierung bzw. einen Fluss von Dokumenten, gemäß einer zeitlichen Anordnung. Auf der y-Achse sind die einzelnen Teilnehmer, also die Netzwerkknoten angetragen. Auf der linken Seite ist ein erster Stapel von Verifikationen angeordnet, der sich auf ein Datenelement bezieht. Bei dem Datenelement handelt es sich beispielsweise um einen Auftrag in der Version V1. Vorliegend wird das Datenelement an drei Teilnehmer übermittelt, welche anhand des vorgeschlagenen Verfahrens das Datenelement verifizieren. Hierzu sind in dem linken Stapel oberhalb der V1 des Auftrags drei Kästen angeordnet. Jeder dieser drei Kästen repräsentiert eine Verifikation eines weiteren Netzwerkknotens. Vorliegend sind also die mindestens zwei Netzwerkknoten drei weitere Netzwerkknoten. Oberhalb des Auftrags V1 erfolgt von den ersten beiden Netzwerkknoten eine positive Verifikation OK. Lediglich der dritte, obere Netzwerkknoten, ermittelt eine negative Verifikation NO. Somit kann eine mögliche Ursache darin bestehen, dass an den dritten Netzwerkknoten das Datenelement fehlerhaft übermittelt wurde. Somit besteht also keinerlei Übereinstimmung bezüglich des übermittelten Datenelements.

In dem vorliegenden Beispiel ist es möglich, dass über einen Auftrag abgestimmt werden soll, der fünf Wareneinheiten vorsieht. Werden nunmehr an die ersten beiden Netzwerkknoten Aufträge ermittelt, die diese Zahl vorsehen, so erfolgt ein positives Verifizieren. Wird der Auftrag bei dem dritten Netzwerkknoten manipuliert und sieht beispielsweise zehn Wareneinheiten vor, so wird festgestellt, dass der übersendete Auftrag und der vorliegende Auftrag nicht übereinstimmen. Dies ist deshalb der Fall, da jeweils der Hash Wert abweicht. Dies wird in dem dritten Netzwerkknoten erkannt, und es erfolgt ein Ablehnen NO.

Daraufhin wird ein neues Datenelement erstellt bzw. eine neue Version des Datenelements übermittelt und es erfolgt ein neues Überprüfen. Somit wird also ein weiterer Auftrag V2 übermittelt und bei einem positiven Verifizieren aller Netzwerkknoten, wie dies oberhalb von V2 eingezeichnet ist, erfolgt ein Genehmigen durch alle Teilnehmer OK.

Daraufhin wird, wie in dem dritten Stapel eingezeichnet ist, eine Rechnung INV erstellt. Diese wird wiederum an alle Netzteilnehmer übermittelt und diese verifizieren den erhaltenen Vertrag. Stimmt der gesendete Vertrag bei allen weiteren drei Netzwerkteilnehmern überein, so wird dieser Auftrag bestätigt OK.

Da nunmehr die Rechnung von den drei weiteren Netzwerkknoten positiv verifiziert wurde, terminiert das Verfahren.

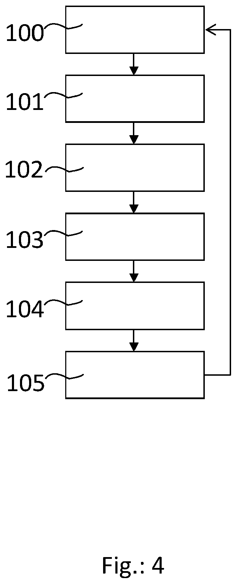

Figur 4 zeigt ein computerimplementiertes Verfahren zur effizienten Absicherung und Verifikation von Datenelementen in einem verteilten Computernetzwerk, aufweisend ein Bereitstellen 100 mindestens eines Datenelements in einem ersten Netzwerkknoten und Erzeugen 101 jeweils einer ersten eindeutigen Identifizierungsinformation, welche jeweils das mindestens eine Datenelement eindeutig kennzeichnet; ein dem ersten Netzwerkknoten entferntes und zudem redundantes und verteiltes Abspeichern 102 jeweils der ersten Identifizierungsinformation; ein Übersenden 103 des mindestens einen Datenelements von dem ersten Netzwerkknoten an mindestens einen zweiten Netzwerkknoten mitsamt jeweils einer Referenz zwischen dem mindestens einen Datenelement und der entsprechenden Identifizierungsinformation; eine Erzeugen 104 einer zweiten Identifizierungsinformation für das jeweils mindestens eine Datenelement in dem mindestens zweiten Netzwerknoten; und ein Verifizieren 105 des übersendeten Datenelements in dem mindestens zweiten Netzwerkknoten mittels eines Vergleichens der ersten Identifizierungsinformation und der zweiten Identifizierungsinformation, wobei die erste Identifizierungsinformation mittels der übersendeten Referenz durch den mindestens zweiten Netzwerkknoten entfernt ausgelesen wird.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben.

## Patentansprüche

1. Computerimplementiertes Verfahren zur effizienten Absicherung und Verifikation von Datenelementen in einem verteilten Computernetzwerk, aufweisend:
- ein Bereitstellen (100) mindestens eines Datenelements in einem ersten Netzwerkknoten und Erzeugen (101) jeweils einer ersten eindeutigen Identifizierungsinformation, welche jeweils das mindestens eine Datenelement eindeutig kennzeichnet;
- ein dem ersten Netzwerkknoten entferntes und zudem redundantes und verteiltes Abspeichern (102) jeweils der ersten Identifizierungsinformation;
- ein Übersenden (103) des mindestens einen Datenelements von dem ersten Netzwerkknoten an mindestens einen zweiten Netzwerkknoten mitsamt jeweils einer Referenz zwischen dem mindestens einen Datenelement und der entsprechenden Identifizierungsinformation;
- eine Erzeugen (104) einer zweiten Identifizierungsinformation für das jeweils mindestens eine Datenelement in dem mindestens zweiten Netzwerknoten; und
- ein Verifizieren (105) des übersendeten Datenelements in dem mindestens zweiten Netzwerkknoten mittels eines Vergleichens der ersten Identifizierungsinformation und der zweiten Identifizierungsinformation, wobei die erste Identifizierungsinformation mittels der übersendeten Referenz durch den mindestens zweiten Netzwerkknoten entfernt ausgelesen wird.

2. Verfahren nach Anspruch 1, **dadurch gekennzeichnet, dass** die Identifizierungsinformation eineindeutig ist.

3. Verfahren nach Anspruch 1 oder 2, **dadurch gekennzeichnet, dass** die Identifizierungsinformation keinen Rückschluss auf den semantischen Inhalt des mindestens einen Datenelements zulässt.

4. Verfahren nach einem der vorhergehenden Ansprüche, **dadurch gekennzeichnet, dass** die Identifizierungsinformation als ein Hash-Wert gebildet wird.

5. Verfahren nach einem der vorhergehenden Ansprüche, **dadurch gekennzeichnet, dass** das redundante und verteilte Abspeichern in einer verketteten Liste erfolgt.

6. Verfahren nach einem der vorhergehenden Ansprüche, **dadurch gekennzeichnet, dass** das Datenelement ausschließlich in dem ersten Netzwerkknoten und dem mindestens zweiten Netzwerkknoten persistent gespeichert wird.

7. Verfahren nach einem der vorhergehenden Ansprüche, **dadurch gekennzeichnet, dass** das Übersenden (103) des mindestens einen Datenelements von dem ersten Netzwerkknoten an mindestens einen zweiten Netzwerkknoten mittels einer Nachrichten basierten Middleware erfolgt.

8. Verfahren nach einem der vorhergehenden Ansprüche, **dadurch gekennzeichnet, dass** die Referenz einen Hinweis auf einen Speicherort und/ oder eine Speicheradresse der ersten Identifizierungsinformation bereitstellt.

9. Verfahren nach einem der vorhergehenden Ansprüche, **dadurch gekennzeichnet, dass** das Erzeugen (104) der zweiten Identifizierungsinformation unter Verwendung eines Hinweises erfolgt, wie die erste Identifizierungsinformation erzeugt wird.

10. Verfahren nach einem der vorhergehenden Ansprüche, **dadurch gekennzeichnet, dass** bei einem Übereinstimmen der ersten Identifizierungsinformation und der zweiten Identifizierungsinformation ein positives Verifizieren erfolgt.

11. Verfahren nach einem der vorhergehenden Ansprüche, **dadurch gekennzeichnet, dass** bei keinem Übereinstimmen der ersten Identifizierungsinformation und der zweiten Identifizierungsinformation das mindestens eine Datenelement verworfen wird und/ oder der erste Netzwerkknoten hierüber informiert wird.

12. Verfahren nach einem der vorhergehenden Ansprüche, **dadurch gekennzeichnet, dass** das Abspeichern (102) jeweils der ersten Identifizierungsinformation in einer Blockchain erfolgt.

13. Systemanordnung zur effizienten Absicherung und Verifikation von Datenelementen in einem verteilten Computernetzwerk, aufweisend:
- eine Schnittstelleneinheit eingerichtet zum Bereitstellen (100) mindestens eines Datenelements in einem ersten Netzwerkknoten und einer ersten Berechnungseinheit eingerichtet zum Erzeugen (101) jeweils einer ersten eindeutigen Identifizierungsinformation, welche jeweils das mindestens eine Datenelement eindeutig kennzeichnet;
- eine Speichereinheit eingerichtet zum dem ersten Netzwerkknoten entfernten und zudem redundanten und verteilten Abspeichern (102) jeweils der ersten Identifizierungsinformation;
- einer Übermittlungseinheit eingerichtet zum Übersenden (103) des mindestens einen Datenelements von dem ersten Netzwerkknoten an mindestens einen zweiten Netzwerkknoten mitsamt jeweils einer Referenz zwischen dem mindestens einen Datenelement und der entsprechenden Identifizierungsinformation;
- mindestens eine zweite Berechnungseinheit eingerichtet zum Erzeugen (104) einer zweiten Identifizierungsinformation für das jeweils mindestens eine Datenelement in dem mindestens zweiten Netzwerknoten; und
- mindestens eine Verifizierungseinheit eingerichtet zum Verifizieren (105) des übersendeten Datenelements in dem mindestens zweiten Netzwerkknoten mittels eines Vergleichens der ersten Identifizierungsinformation und der zweiten Identifizierungsinformation, wobei die erste Identifizierungsinformation mittels der übersendeten Referenz durch den mindestens zweiten Netzwerkknoten entfernt ausgelesen wird.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
